# EUROPEAN PATENT SPECIFICATION

(11) **EP 2 961 519 B1**
(45) Date of publication and mention of the grant of the patent: **08.08.2018**
(21) Application number: 13876440.2
(22) Date of filing: 09.12.2013
(51) Int. Cl.: B01D 61/40, B01D 65/02, B05D 1/18, C10G 31/11, C10G 53/02, C10G 33/06, B01D 67/00, B01D 63/02, B01D 61/24

(54) **IMPROVING OIL QUALITY USING A MICROPOROUS HOLLOW FIBER MEMBRANE**
VERBESSERUNG DER ÖLQUALITÄT MIT EINER MIKROPORÖSEN HOHLFASERMEMBRAN
AMÉLIORATION DE LA QUALITÉ D'HUILE AU MOYEN D'UNE MEMBRANE EN FIBRES CREUSES MICROPOREUSE

(30) Priority: 26.02.2013 US 201361769286 P; 14.06.2013 US 201313918766; 11.10.2013 US 201314052516
(43) Date of publication of application: 06.01.2016
(73) Proprietor: Board of Regents, The University of Texas System, Austin, TX 78701 (US); Organic Fuels Algae Technologies, LLC, Houston, TX 77277 (US)
(72) Inventor: SEIBERT, Frank, Austin, TX 78759 (US); BRIGGS, Stephen, William, Austin, TX 78753-3928 (US); TRUSCOTT, Stacy, S., Austin, TX 78746 (US); KIPP, Peter, B., Houston, TX 77027 (US)
(74) Representative: Sonn & Partner Patentanwälte
(86) International application number: PCT/US2013/073816
(87) International publication number: WO 2014/133619

(56) References cited:
- EP-A1- 1 859 852
- WO-A1-01/66910
- WO-A1-2013/025260
- US-A- 4 814 088
- US-A- 4 966 707
- US-A- 5 209 838
- US-A- 6 117 327
- US-A1- 2005 147 757
- US-A1- 2008 250 700
- US-A1- 2011 174 734
- US-A1- 2013 334 137
- US-B1- 6 187 987

## Description

### TECHNICAL FIELD OF THE INVENTION

The present invention relates in general to the field of improving oil quality, and more particularly, to improving oil quality and the performance of a microporous hollow fiber membrane contactor.

### BACKGROUND OF THE INVENTION

Without limiting the scope of the invention, its background is described in connection with reducing the level of impurities in oils and improving oil recovery and reclamation.

United States Patent No. 8,128,827, issued to Gallo, et al., teaches a modular oil-based sludge separation and treatment system. Briefly, this patent discloses a method of recovering oil from oil-based sludge including the steps of homogenizing an oil-rich phase, a water-rich phase, and a solids-rich phase of an oil-based sludge, removing particulates from the oil-based sludge as the sludge traverses a shaker screen, heating the sludge, injecting a chemical into the heated sludge and mixing the chemical with the heated sludge, separating the phases of the chemically-treated sludge into a solids component stream, a water component stream, a first oil component stream, and a gas component stream, removing solids from the first oil component stream with a decanting centrifuge to form a second oil component stream, and removing water and solids from the second oil component stream with a disk stack centrifuge.

United States Patent No. 7,186,344, issued to Hughes is directed to a membrane-based fluid treatment system. Briefly, this patent teaches a process for removing soluble and insoluble inorganic, organic, and microbiological contaminants from a fluid stream employing a pretreatment module, a posttreatment module, a recycle stream module or any combination thereof, and a membrane module. The process reduces the problems associated with membrane fouling and increases contaminant removal capacity.

United States Patent Application No. 2010/0173806, filed by Fan, et al., is directed to the extraction of hydrocarbons from hydrocarbon-containing materials and includes a method of extracting hydrocarbon-containing organic matter from a hydrocarbon-containing material includes the steps of providing a first liquid comprising a turpentine liquid; contacting the hydrocarbon-containing material with the turpentine liquid to form an extraction mixture; extracting the hydrocarbon material into the turpentine liquid; and separating the extracted hydrocarbon material from a residual material not extracted.

United States Patent Application No. 2005/0098504 filed by Manz, et al., is directed to an oil and gas well fracturing (frac) water treatment process. Briefly, a novel process for treating and removing undesirable impurities from oil and gas well fracturing fluid is disclosed. For example, a method for treating fracturing water is taught comprising: (a) passing contaminated fracturing water containing solids and liquid through a mechanical separator to remove solids from the liquid; (b) treating the fracturing water liquid with an alkaline agent to increase the pH of the liquid to a level of above 9; (c) adding a coagulant to the fracturing water to form an agglomerate and separating the agglomerate from the fracturing water; (d) reducing the pH of the fracturing water of step (c) to a level of less than about 5.5; and (e) adding an oxidizing agent to the fracturing water of step (d) to oxidize oxidizable impurities in the fracturing water.

United States Patent No. 5,938,922 issued to Fulk, Jr., et al., is directed to a contactor for degassing liquids. Briefly, these inventors teach a contactor for degassing liquids includes a perforated core, a plurality of microporous hollow fibers, and a shell, wherein the fibers surround the core and have two ends. The system for degassing liquids includes a source of liquid containing a gas, a source of vacuum, and the contactor.

United States Patent No. 6,436,290, issued to Glassford is directed to a method and apparatus for separating mixtures of organic and aqueous liquid phases. Briefly, this patent is said to include a method and apparatus for separating a mixture containing an aqueous liquid and an immiscible organic phase using microporous hollow fibers. Such mixtures are separated into a substantially organic-free aqueous phase and a substantially aqueous-free organic phase. The mixture is pressurized in a controlled low shear manner to minimize emulsification as it is contacted with the fibers. Productivity is said to be enhanced by separating as a third product stream, a further organic phase containing only small amounts of an aqueous phase, which for some applications can usefully be combined with the substantially aqueous-free organic phase.

In contrast to the vacuum used in U.S. Patent No. 5,938,922, United States Patent No. 8,506,685, issued to Taylor, et al., is directed to a high-pressure liquid degassing membrane contactors and methods of manufacturing and use. Briefly, this patent teaches an improved liquid degassing membrane contactor or module in a high-pressure housing and at least one degassing cartridge therein. The high pressure housing is a standard, ASME certified, reverse osmosis (RO) or water purification pressure housing or vessel (made of, for example, polypropylene, polycarbonate, stainless steel, corrosion resistant filament wound fiberglass reinforced epoxy tubing, with pressure ratings of, for example, 150, 250, 300, 400, or 600 psi, and with, for example 4 or 6 ports, and an end cap at each end) and that the degassing cartridge is a self-contained, hollow-fiber membrane cartridge adapted to fit in the RO high pressure housing.

US5209838 discloses a method for removing impurities from a mixture containing oil, comprising pre-treating a membrane using several steps.

### SUMMARY OF THE INVENTION

The present invention removes oil insoluble impurities, such as water and solids, from oil, thereby improving the commercial value of the oil. The present invention includes a method for removing contaminants from a contaminated oil comprising the steps of: pretreating a membrane contactor system having a first and a second surface with a hydrophobic liquid, wherein the hydrophobic liquid is contacted to at least one of the first and second surfaces; obtaining a contaminated oil that comprises oil and lipophobic contaminants; contacting the contaminated oil onto a first surface of one or more membrane contactors to coalesce the oil on the first surface; and collecting the coalesced oil from the contaminated oil on the second surface of the membrane contactor. In one aspect, the method further comprises a solid removal system for removing small, medium and large solids from an oil/water mixture to form an oil and water stream containing only solids smaller than 30 microns, wherein the small, medium or large solids are removed with at least one of a sand filter, a rock filter, a porous ceramic material, a centrifuge, a mesh, a particulate filter, a sieve, a strainer, or gravity. In another aspect, the source of the contaminated oil is at least one of an oil-rich stream, crude oil, transportation fuel, heating oil, refined petroleum products, petrochemicals, bio-oils, renewable oils, vegetable oils, reclaimed oils, waste oils, oil sands tailings oil industry liquid streams, oil contaminated water or brine, drilling mud, produced water and oil sands tailings. In another aspect, the contaminated oil is at least one of: not subjected to gravity separation prior to processing, subjected to gravity separation prior to processing, or subjected to centrifugation prior to processing. In another aspect, the membrane contactor is pre-treated with a soak that is defined further as comprising an oil soak or circulation of oil in the membrane contactor with the hydrophobic liquid on at least one of the first, the second, or both the first and second surfaces of the membrane contactor. In another aspect, the membrane contactor is pre-treated with a soak that is defined further as comprising contacting at least one of the first, the second, or both the first and second surfaces of the membrane contactor with an alcohol, followed by a caustic, followed by an acid, followed by drying with an inert gas, followed by an oil soak or circulation of the membrane contactor with the hydrophobic liquid. In another aspect, the contaminated oil is processed by the system within 1, 2, 4, 6, 8, 12, 24, 26, 48 or 72 hours from removal of large solids. In another aspect, the membrane contactor is a hydrophobic membrane or membrane module comprising hollow fiber microporous membranes. In another aspect, the membrane contactor is a hydrophobic hollow fiber membrane comprising polyethylene, polypropylene, polyolefins, polyvinyl chloride (PVC), amorphous polyethylene terephthalate (PET), polyolefin copolymers, poly(etheretherketone) type polymers, surface modified polymers, mixtures or combinations thereof or a surface modified polymer that comprises polymers modified chemically at one or more halogen groups by corona discharge or by ion embedding techniques. In another aspect, the oil separated from the contaminated oil by the membrane contactor is coalesced with a counterflowing fluid, wherein the at least one counterflowing fluid selected from non-polar fluid, alkanes such as hexane, aromatic fluid such as benzene, toluene, ethers such as diethyl ether, halogenated fluid such as chloroform, dichloromethane, and esters such as ethyl acetate. In another aspect, the second surface is in contact with a counterflowing fluid, which can be an oil previously recovered using a hollow fiber contactor. In another aspect, the method further comprises a membrane cleaning system that removes debris that clogs the membrane contactor system, and optionally comprising a clog detector that detects a clog at the membrane contactor system. In another aspect, the hydrophobic liquid is selected from at least one of mineral oil, vegetable oil, diesel fuel or oil, kerosene, naphtha, petroleum, or aromatic or aliphatic hydrocarbons containing four or greater carbon atoms. In another aspect, the isoparaffinic hydrocarbon is isopar L, isopar C, isopar E, isopar G, isopar H, isopar K, isopar M, or isopar V. In another aspect, the isoparaffinic hydrocarbon is a synthetic isoparaffinic hydrocarbon. In another aspect, the soak is for at least 5, 10, 20, 30, 40, 50, 60, 90, 120, 150 minutes, 0.1, 0.2, 0.3, 0.5, 1, 2, 3, 4, 5, 6, 7, 10, 14, 18, 20, 25, or 30 days. In another aspect, following use of the membrane the performance of the membrane degrades, wherein the membrane is washed using an acid, base and alcohol wash, the membrane is soaked in the hydrophobic liquid thereby increasing the flux rate of the hydrophobic membrane or membrane module by at least 10%. In another aspect, the step of contacting the hydrophobic membrane or membrane module with the hydrophobic liquid increases the flux rate by at least 10, 11, 12, 13, 14, 15, 20, 25, 30, 35, 40, 50, 60, 70, or 75%.

### BRIEF DESCRIPTION OF THE DRAWINGS

For a more complete understanding of the features and advantages of the present invention, reference is now made to the detailed description of the invention along with the accompanying figures and in which:
Figure 1 shows the remnants of an oil/water mixture after application of the present invention. The lower layer is water removed from the oil/water mixture and the upper layer is the small volume of the remaining oil/water mixture from the shell side of the membrane at the conclusion of the process that was not separated during the operation.
Figure 2 is a graph that shows flux test results using an X50 hollow fiber membrane contactor with 20 m² surface area. Isopar L was flowed on the shell side of the membrane at up to 4 gallons per minute (∼15.1 L per minute) at a range of pressures. Oil that passed through the membrane to the tube side was collected. The flux rate is determined based on the oil volume recovered from the tube side per minute.
Figure 3 is a graph that shows flux test results using an X40 hollow fiber membrane contactor with 20 m² surface area. Isopar L was flowed on the shell side of the membrane at up to 4 gallons per minute (∼15.1 L per minute) at a range of pressures. Oil that passed through the membrane to the tube side was collected. The flux rate is determined based on the oil volume recovered from the tube side per minute.
Figures 4A and 4B show samples of crude oil processed with the method. The samples of oil recovered from the contaminated oil have no visible solids (Figure 4A) and no visible water (Figure 4B).
Figures 5A and 5B show the flux of pure isopar L through a recently cleaned X50 membrane.
Figures 6A and 6B show the flux history of X40 membranes with isopar L (Figure 6A) and the flux history of X40 membranes and performance with cleaning in accordance with the present invention (Figure 6B).
Figure 7 shows a flow diagram of cleaning methods, comparing the manufacturer's recommended method to the modified methods established through this work.
Figure 8 shows a graph of membrane conditioning using a generic, low-cost hydrophobic liquid (diesel fuel).
FIG. 9 shows Produced water with 10-15 mg/L iron content was filtered on a 12 uM glass filter to remove insoluble iron (A, left); water treated with the membrane develops new insoluble iron more slowly (A, center), as the oxygen content of the water is lowered by treatment with the membrane (A, right).
FIGS. 10A and 10B are images showing simultaneous oil and gas removal. Bubbles are evident in the tube side collection line (10A) and tube side flow meter (10B) during operation.

### DETAILED DESCRIPTION OF THE INVENTION

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

Previously, the present inventors have developed United States Patent Application Non-methods for insoluble oil recovery from aqueous slurries. For example, U.S. Patent Application No. 20110174734, filed by Seibert, et al. teaches the development and application of a novel non-polar oil recovery process utilizing a non-dispersive oil recovery method to coalesce and recover oil from a bio-cellular aqueous slurry. The process can be used to recover algal oil from a lysed algae slurry, recovery of Omega fatty acids from a bio-cellular aqueous feed, recovery of Beta-carotene from a bio-cellular aqueous feed and for the removal of oil from produced water in oil production and similar type applications that would typically be conducted by gravity settling or centrifugation. The technique of the present invention utilizes a microporous hollow fiber (MHF) membrane contactor. The novel non-polar oil recovery process described herein can be coupled to a collecting fluid (a non-polar fluid such as heptane, a biodiesel mixture or the previously recovered oil) that is circulated through the hollow fiber membrane. In cases where the previously recovered oil is used the recovered oil does not have to be separated from the collection fluid, and separation costs can be eliminated.

Yet another example by the present inventors includes methods and systems for non-dispersive insoluble oil recovery from aqueous slurries. U.S. Patent Application No. 20120184759, filed by Kipp, et al., teaches the development and application of a novel non-polar oil recovery process utilizing a non-dispersive fluid method to coalesce and recover oil from a lysed or non-lysed Yeast slurry using a microporous hollow fiber (MHF) membrane contactor. More particularly, the present inventors teach methods and systems for recovering one or more insoluble oils from a liquid source that comprises insoluble oils and yeast, comprising using one or more non-dispersive membrane contactors, comprising the steps of: pumping the liquid source comprising the one or more oils from a reactor to the contactor; pumping a collection fluid through the one or more contactors; contacting the one or more oils in the liquid source with the collection fluid pumped in the one or more contactors; pumping a first stream from the contactor back to the reactor, wherein the first stream comprises the liquid source with the Yeast without recovered oils, wherein the Yeast remain viable; and removing a second stream from the contactor or the vessel, wherein the second stream comprises the collection fluid and recovered oils.

Another example by the present inventors includes additional methods and systems for non-dispersive isolation and insoluble oil recovery from aqueous slurries. In this example, U.S. Patent Application No. 20120208247, includes methods and systems for removing one or more insoluble oils from a liquid source, comprising one or more organisms, using one or more non-dispersive membrane contactors, comprising the steps of: pumping the liquid source comprising the one or more oils from a reactor to the contactor; pumping a collection fluid through the one or more contactors; contacting the one or more oils in the liquid source with the collection fluid pumped in the one or more contactors; pumping a first stream from the contactor back to the reactor, wherein the first stream comprises the liquid source with the one or more organisms without removed oils, wherein the one or more organisms remain viable; and removing a second stream from the contactor or the vessel, wherein the second stream comprises the collection fluid and removed oils.

The method of the present invention includes a process to exclude oil insoluble materials from oil-rich liquid sources, e.g., crude oil, transportation fuel, heating oil, refined petroleum products, petrochemicals, bio-oils, renewable oils, vegetable oils, reclaimed oils, waste oils or oil sands tailings as non-limiting examples. In addition, oil-rich sources include fluids produced from oil and gas operations that include water, brine, sand, rocks and other oil insoluble liquids and solids that comprise hydrocarbons that the user wants to recover or remove from the oil-rich source. The oil-rich liquid stream may result from a process that involves initial steps to remove physically large solids by gravity settling, filtration and/or centrifugation as non-limiting examples. The size restriction on the solids is required to efficiently complete the removal of oil insoluble materials. Physically small solids (less than approximately 30 uM) can pass into the shell side of the hollow fiber contactor, but in order to pass through the pores to the tube side, the solids would have to be less than approximately 50 nM. In practice, solids are too physically large to pass through the pores.

The process allows water removal from liquid oil sources, non-limiting examples such as oil industry wastes, crude oil, transportation fuel, heating oil, refined petroleum products, petrochemicals, bio-oils, renewable oils, vegetable oils, reclaimed oils, waste oils or oil sands tailings. Currently, oil is recovered by skimming following gravity settling or centrifugation in combination often with up-front filtration, chemical addition or the like. A non-dispersive membrane contactor is not currently used to promote more rapid or efficient oil recovery or clean up. As used herein, the term "contaminated oil" encompasses an oil stream or pool that may contain one or more of the following in any combination; oils (hydrocarbons and hydrocarbon-rich molecules of commercial value), and, clay, rocks, sand, cells and/or cellular debris, insoluble particulates having diameters from, e.g., 100 nm to 1000 micrometers, water, brine, salts, gums, drilling fluids or muds, solvents, lipophobic agents, lipophilic agents, inorganic or organic: molecules, oligomers or polymers, solvents, and/or surfactants. In certain examples, the "contaminated oil" is an oil that is an "off-spec" oil or fuels that can not be sold for the same price, and many require clean up prior to sale. Because "off-spec" oil has diminished value, the present invention has immediate use in oil clean up, with diverse, large commercial applications.

As used herein, the term "oil" refers to, e.g., hydrocarbon or hydrocarbon-rich molecules including a complex mixture of petrochemicals, lipids, hydrocarbons, fatty acids, triglycerides, aldehydes, etc. The compounds included herein may be from, e.g., C₈ (jet fuel compatible) up to C₆₀ (motor oil compatible) or larger. As used herein, a "membrane contactor" refers to a hydrophobic microporous hollow fiber membrane. Non-limiting examples of membrane contactors include hydrophobic membrane or membrane module that comprises hollow fiber microporous membranes, e.g., hydrophobic hollow fiber membrane made from polyethylene, polypropylene, polyolefins, polyvinyl chloride (PVC), amorphous Polyethylene terephthalate (PET), polyolefin copolymers, poly(etheretherketone) type polymers, surface modified polymers, mixtures or combinations thereof.

As used herein, the term "hydrophobic liquid" refers to liquids that are partially or completely water immiscible and that when contacted to the hydrophobic membranes or membrane contactors improve the lifetime of the membrane. Non-limiting examples of hydrophobic liquids for use with the present invention include mineral oil, vegetable oil, diesel fuel or oil, kerosene, naphtha, petroleum, or aromatic or aliphatic hydrocarbons containing four or greater carbon atoms. In one non-limiting example, the hydrophobic liquid can be one or more isoparaffinic hydrocarbon selected from at least one of isopar L, isopar C, isopar E, isopar G, isopar H, isopar K, isopar M, or isopar V, or synthetics thereof.

The system can also include, but does not require a collection fluid, which can be a hydrophobic liquid, a solvent, diesel or biodiesel, oil, or mixtures thereof.

This new method teaches that liquid sources that are predominately oil that is contaminated can be "cleaned" using a microporous hollow fiber membrane. Water in oil emulsions, for example, can be separated, in which a high purity oil is generated from a mixture of oil with oil insoluble liquid (or solids, see below). The oil in the mixture is separated by passing through the membrane; the water is left behind. This technique could be applied in various applications to remove water from oil. In addition, the method will separate solids from oil, because the solids are too small to traverse the microscopic pores in the hollow fiber membrane that the oil passes through. Thus, an oil mixed with insoluble solids and water can be passed through the hollow fiber membrane and an oil stream substantially devoid of water and solids will be recovered. The system can be operated in a mode in which the water removed from the oil stream accumulates and is drained to allow continuous operation.

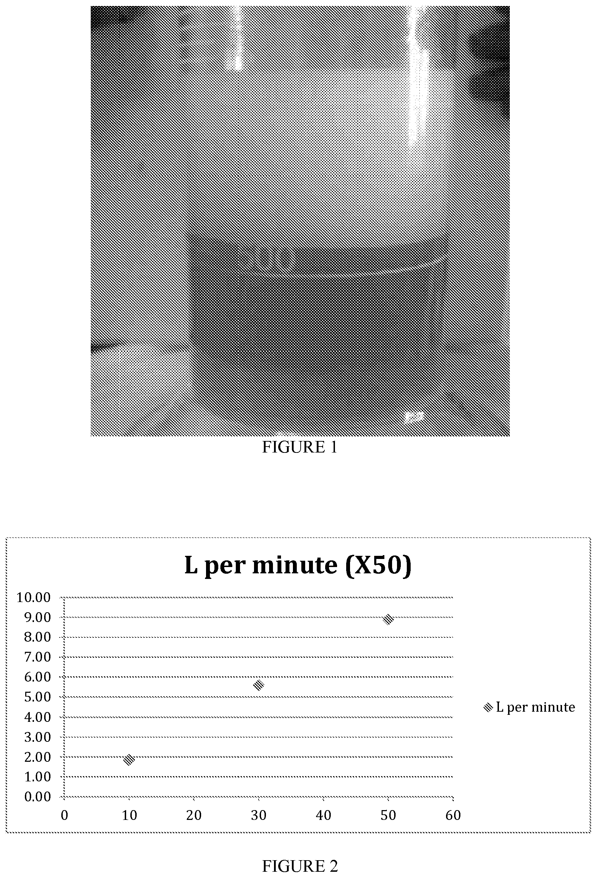

A water in oil emulsion was separated by exposure to a hollow fiber membrane. The oil passed through the membrane and was recovered on the tube side; the water remained on the shell side of the module. Figure 1 shows the remnants of the oil on the shell side after draining. The water in oil emulsion (top layer) still exists, but much of the water has been separated from the water and is now free water (bottom layer).

**Table 1. Pure Oil Flux Test Results**

| X50 | |
|---|---|
| 3 | gallons per minute |
| 11.355 | liters per minute 68.95 kPa (10 psig) |
| 130 | seconds to 4L, Trial 1 |
| 130 | seconds to 4L, Trial 2 |
| 20 | m^2 surface area |
| 1.538 | flux rate (mL per m^2 per second) |
| 16% | % flux |
| 1.846 | L per minute |

**Table 2. Pure Oil Flux Test Results**

| X50 | |
|---|---|
| 3.76 | gallons per minute |
| 14.2316 | liters per minute 206.84 kPa (30 psig) |
| 43 | seconds to 4L, Trial 1 |
| 43 | seconds to 4L, Trial 2 |
| 20 | m^2 surface area |
| 4.651 | flux rate (mL per m^2 per second) |
| 39% | % flux |
| 5.58 | L per minute |

**Table 3. Pure Oil Flux Test Results**

| X50 | |
|---|---|
| 0 | gallons per minute |
| 0 | liters per minute 344.74 kPa (50 psig) |
| 27 | seconds to 4L, Trial 1 |
| 27 | seconds to 4L, Trial 2 |
| 20 | m^2 surface area |
| 7.407 | flux rate (mL per m^2 per second) |
| 8.89 | L per minute |

| X50 | |
|---|---|
| pressure | L per minute |
| 10 | 1.846 |
| 30 | 5.58 |
| 50 | 8.89 |

**Table 4. Pure Oil Flux Test Results**

| X40 | |
|---|---|
| 3.1 | gallons per minute |
| 11.7335 | liters per minute 86.18 kPa (12.5 psid) |
| 669 | seconds to 4L, Trial 1 |
| 649 | seconds to 4L, Trial 2 |
| 20 | m^2 surface area |
| 0.298953662 | flux rate (mL per m^2 per second) |
| 3% | % flux |
| 0.359 | L per minute |

**Table 5. Pure Oil Flux Test Results**

| X40 | |
|---|---|
| 3.9 | gallons per minute |
| 14.7615 | liters per minute 206.84 kPa (30 psid) |
| 232 | seconds to 4L, Trial 1 |
| 234 | seconds to 4L, Trial 2 |
| 20 | m^2 surface area |
| 0.854700855 | flux rate (mL per m^2 per second) |
| 7% | % flux |
| 1.03 | L per minute |

**Table 6. Pure Oil Flux Test Results**

| | |
|---|---|
| 0 | gallons per minute |
| 0 | liters per minute 344.74 kPa (50 psid) |
| 140 | seconds to 4L, Trial 1 |
| 138 | seconds to 4L, Trial 2 |
| 20 | m^2 surface area |
| 1.438848921 | flux rate (mL per m^2 per second) % flux |
| 1.74 | L per minute |

| X40 | |
|---|---|
| pressure | L per minute |
| 12.5 | 0.359 |
| 30 | 1.03 |
| 50 | 1.74 |

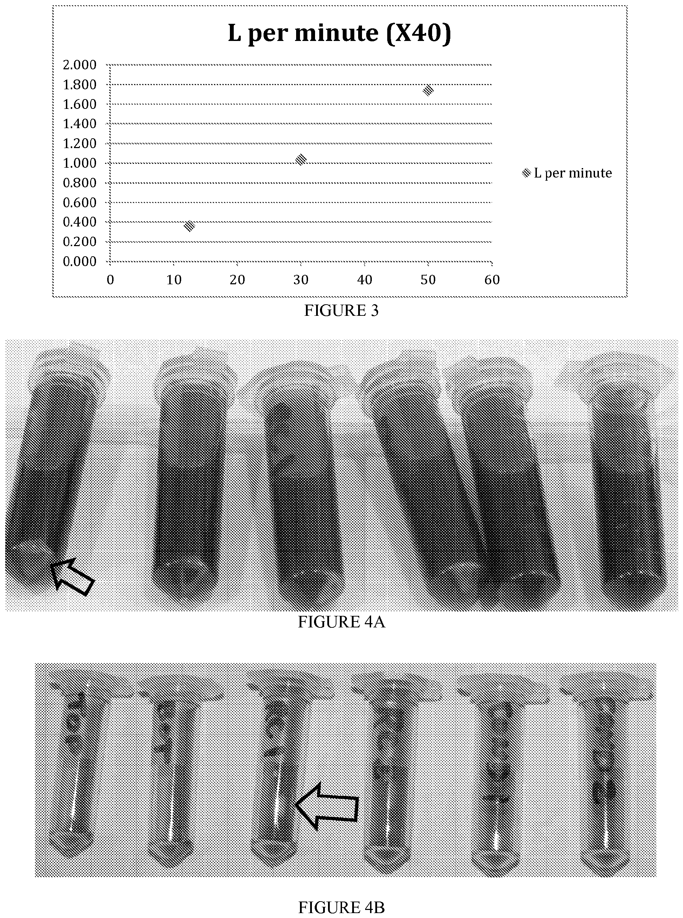

Tables 1 to 3 shows the flux test parameters and the results of the pure oil flux using the present invention using an X50 membrane system. Tables 4 to 6 shows the flux test parameters and the results of the oil separation using the present invention using an X40 membrane system. The results of the flux tests from Tables 1 to 3 and Tables 4 to 5 are summarized in the graphs of Figures 2 and 3, respectively.

Figures 4A and 4B shows samples of crude oil processed with the method. Briefly, two (2) gallons of crude oil, recovered by gravity separation and skimming, were further cleaned using the membrane. The contaminated crude oil was circulated through the shell side of an X50 membrane with 1.4 m² surface area to allow the oil to coalesce to the tube side; the contaminants were left on the shell side. Samples of the contaminated oil and the cleaned oil were centrifuged at 12,000 x g to pellet suspended solids and observe the presence of solids and water. The samples of oil recovered from the contaminated oil have no visible solids (Figure 4A) and no visible water (Figure 4B).

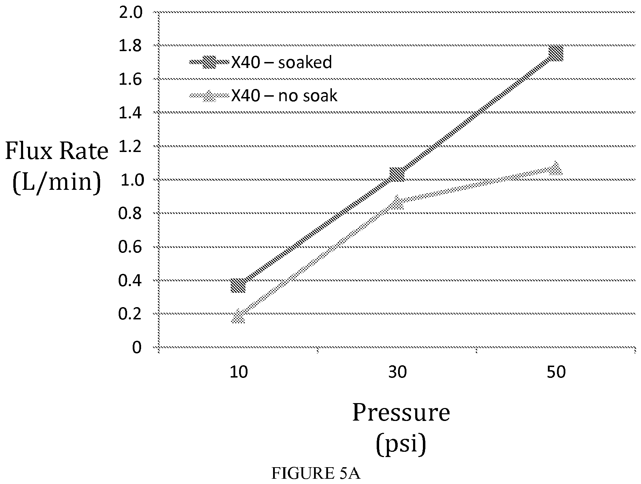

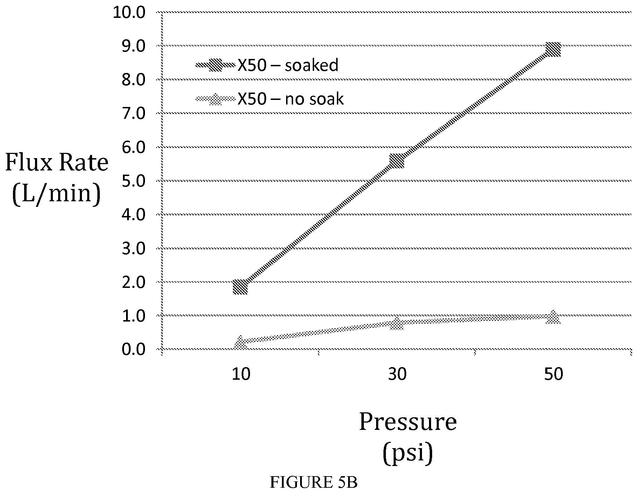

Figure 5 shows the flux of pure isopar L through a recently cleaned X50 membrane. The membrane had been used extensively and repeatedly with complex feedstocks, and cleaned multiple times according to the manufacturer's instructions. This conventional cleaning uses sequential water, acid, base and isopropyl alcohol washes, followed by complete drying. The cleaning method is known to eventually reduce the functional lifespan of the membranes. Following cleaning, the membranes passed the manufacturer's quality control test. As shown in 5A and 5B, the oil flux rate of the clean membrane was poor, consistent with a membrane approaching the end of its useful life. At the conclusion of the initial isopar L testing, the membrane was filled with isopar L, capped and set aside for approximately three weeks. Following a three week soak in isopar L, the oil flux testing was repeated. The flux rate of the membrane was dramatically improved by the prolonged isopar L soak.

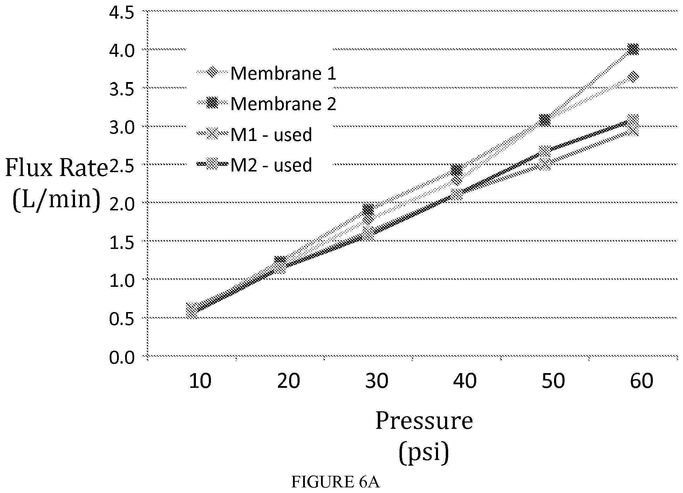

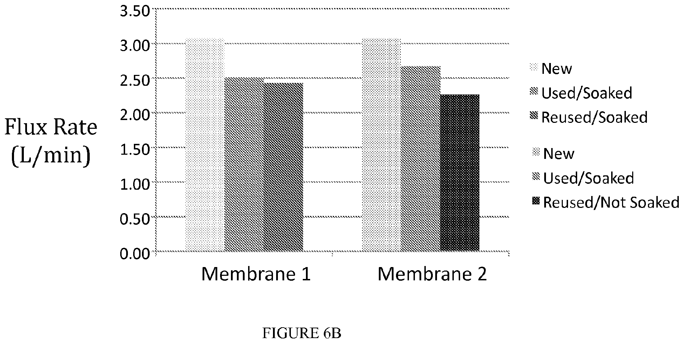

Figures 6A and 6B show the flux history of X40 membranes with isopar L. Membranes were tested for isopar L flux when new. The membranes were then sequentially exposed to two distinct oilfield produced waters. Following exposure to oilfield water 1, the membranes were soaked in isopar L for several days and flux testing was repeated. The conventional cleaning method was not used. These results show that after exposure to complex feedstocks, the membranes achieved flux rates approximately 75% of the rates achieved when the membranes were new (Figure 6A). Following exposure to oilfield water 2, membrane 1 was filled with isopar L when the testing ended. By contrast, membrane 2 was capped and set aside for approximately ten days without isopar L. To clean and restore the membranes, each was conditioned with isopar L for approximately 30 minutes (6.621/min (1.75 gpm), 344.74 kPa (50 psi)). During the conditioning, the performance of the membranes steadily improved (data not shown). At the conclusion of the conditioning, the flux rate of membrane 1 was nearly fully restored to the flux rate prior to the reuse (Figure 6B). By contrast, membrane 2's flux was approximately 80% of the flux rate prior to the reuse. Immediate exposure to a hydrophobic liquid (isopar L) at shut down appeared to shorten the cleaning time for the membranes following oil exposure.

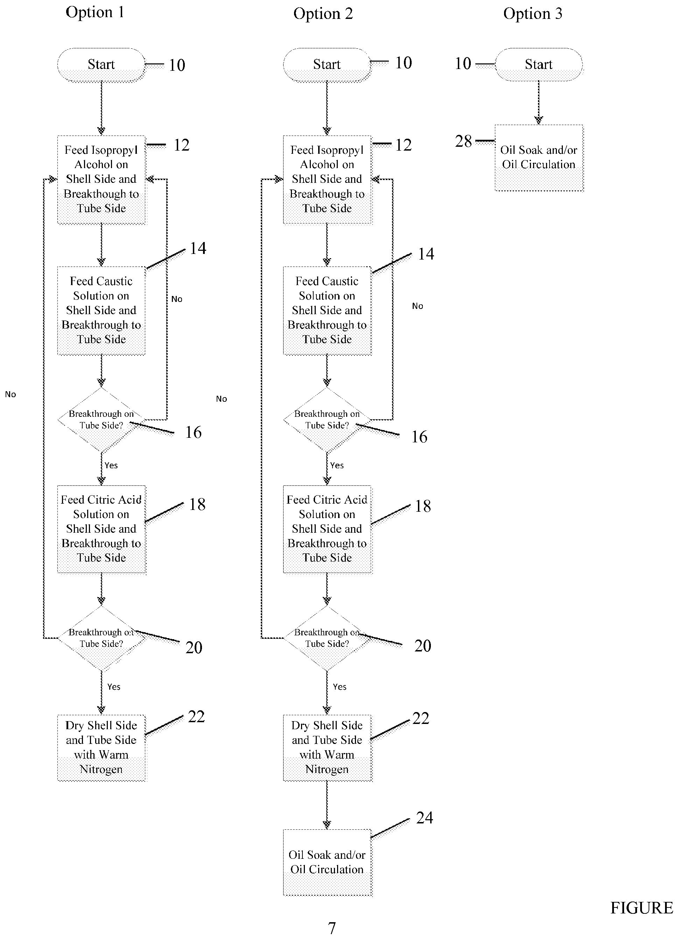

Figure 7 shows the flow diagrams of cleaning methods. The flowchart labeled Option 1 shows the manufacturer's recommended cleaning method. The flow diagrams labeled Options 2 and 3 shows the improved methods of the present invention that lead to an increased useful usage time of the present invention, the improved performance of the membrane once performance has degraded due to usage, or both improve useful life of the membrane and increased performance of the membrane after degradation of membrane performance but before the novel treatment of the present invention. Briefly, the methods begin with a start 10. In Options 1 and 2, which are flowcharts for a method that can be used with used membranes that have reduced performance, an alcohol wash 12 (e.g., methyl, ethyl, isopropyl or other alcohol) is used on either the shell or tube sides of the membrane (used herein interchangeably with first and second side), which is followed by a caustic wash 14 most commonly performed on the shell side of the membrane until the solution breaks-through to the tube side of the membrane. Next, if the caustic wash 14 does not lead to a breakthrough at step 16, then the alcohol wash step 12 is repeated followed by the caustic wash 14. If at step 16 the caustic solution does breakthrough to the tube side, then an acid solution 18 is then contacted with the shell side. Next, if the acid wash 18 does not lead to a breakthrough of the acid solution, then the process begins again with the alcohol wash 12. If the acid solution breaks-through to the tube side, then the membrane is washed at step 22, e.g., using an inert gas such as nitrogen. In contrast to the recommendations of the manufacturer's cleaning process, the present inventors have found a significant and surprising improvement in both the performance but also the useful life of the membrane by adding an oil-soak or circulation step 24 following the drying step 22. Based on this surprising observation, the present inventors developed a novel pre-treatment for the membrane in which, prior to any use, the membrane is pre-soaked 28 in oil or by circulating oil on the shell, tube or both sides of the membrane. The cleaning and conditioning method disclosed herein is dramatically simpler, faster and less expensive than the method recommended by the manufacturer. The method disclosed herein is also compatible with rapid, high-efficiency start up for oil removal applications. Furthermore, it is important to note that these membranes are designed for separating gases, thus, it is counterintuitive to contact the membranes with any fluid, in particular any type of oil.

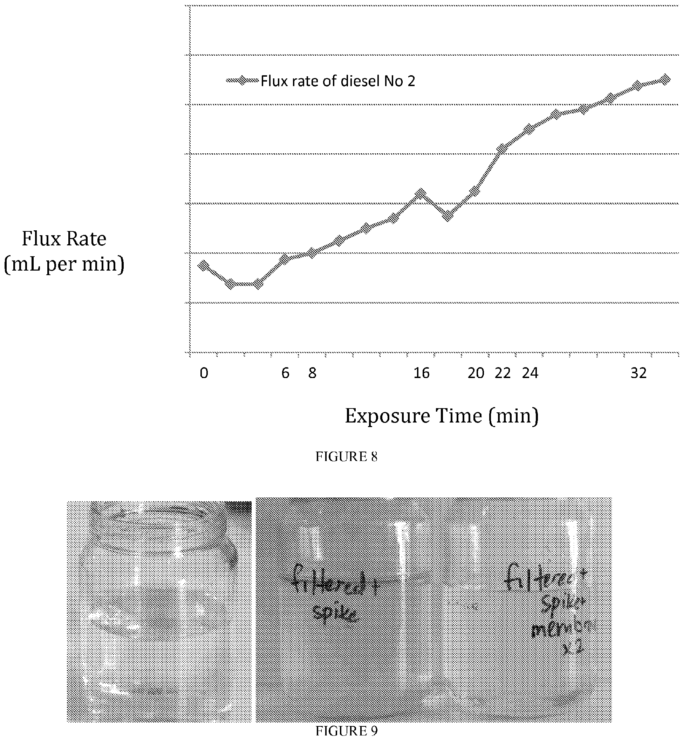

Figure 8 shows the flux of diesel fuel through a used, unclean X40 membrane. The membrane had been used with industrial wastewater containing oil. Following use, the membrane was rinsed with water, and then set aside with no further treatment. Approximately six weeks later, the membrane was completely dry. Diesel fuel was circulated through the membrane for approximately 35 minutes at a flow rate of 6.62 l/min (1.75 gpm) and 344.74 kPa (50 psi). No collection fluid was used. The rate of flux of diesel fuel was monitored during the circulation by measuring the volume of diesel recovered from the tube side of the membrane every two minutes (following a brief normalization period to establish steady state operating conditions). As shown in the figure, the initial flux rate of the membrane was approximately 1580 mL per minute. The flux rate improved during continued exposure to diesel, reaching a flux rate of 1950 mL per minute after 35 minutes of continuous exposure. The flux rate of the dirty membrane improved by more than 20% during the test, establishing that a generic, low-cost hydrophobic liquid is sufficient to condition the membrane and improve function.

FIG. 9 shows produced water with 10-15 mg/L iron content was filtered on a 12 uM glass filter to remove insoluble iron (FIG. 9, left). Following filtration, crude oil was spiked into the filtered water at a concentration of approximately 100 ppm. A sample of the filtered water with spiked oil was collected and set aside. The remaining produced water with spiked oil was passed through the membrane three times to remove the oil. Approximately 3 hours after the oil was introduced into the filtered water, the samples of the starting material and the water treated with the membrane were compared. The formation of insoluble iron in the water is driven by the presence of oxygen in the water. The untreated, filtered water steadily develops new insoluble iron over time. The water treated with the membrane develops new insoluble iron more slowly (FIG. 9, center), as the oxygen content of the water is lowered by treatment with the membrane (FIG. 9, right). Oil-in-water analyses were conducted on samples of the filtered water, filtered water with oil spiked and the membrane-treated water. Passing the water with spiked oil through the membrane twice reduced the oil concentration to less than 3 ppm and increased the pH from 7 to 7.5. The increase in pH is consistent with the removal of CO2 from the water. Table 7 summarizes the results of the removal of oil in water and the change in pH.

**Table 7. Oil removal was quantified**

| **Sample** | **OIW (ppm)** | **pH** |
|---|---|---|
| Filtered water | 5 | Not determined |
| + Oil, starting | 305 | 7 |
| + Oil, membrane first pass | 10 | Not determined |
| + Oil, membrane second pass | <3 ppm | 7.5 |

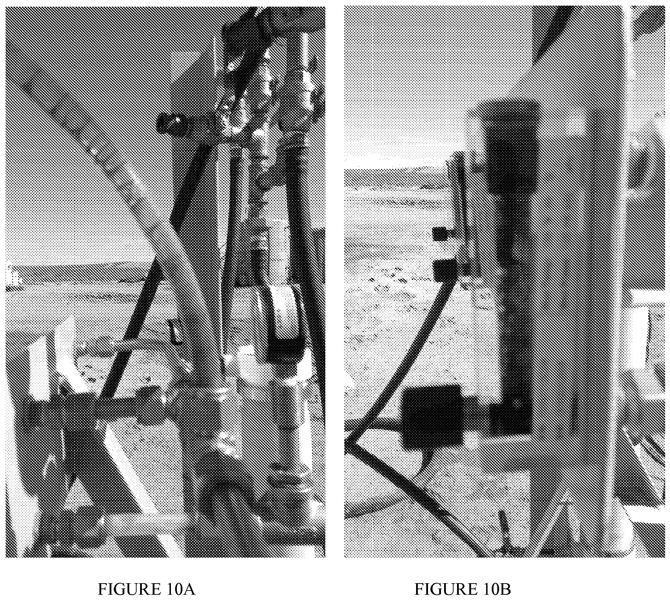

FIGS. 10A and 10B show the apparatus operating to remove oil from produced water at an oilfield site. As can be seem clearly in Fig. 10A, gas is removed from the stream during oil removal as demonstrated by the bubbles in the tubing. Bubbles continuously appear in the tube side collection volume with the collected oil, as seen in the tube side outflow line (10A) and at a flow meter (10B). The produced water stream was under pressure.

The skilled artisan will recognize that some streams will either have no solids or solids that already meet the size selection criteria for processing (less than 10, 20, 30, 40 or 50 microns), so the stream may not need any pre-processing. If it is the case that some of the solids will stick to the membrane and cause a clog, a cleaning processes is used to remove the solids from the membrane to continue use. The present invention may also include a clog detector that determines if the membrane contactor system has become at least partially or fully clogged. Whether or not a clog is detected (e.g., if a clog detector is not used and rather a regular or sporadic cycle or maintenance is used), the invention may also include a system or method for cleaning the membrane contactor, e.g., physical-mechanical cleaning, use of chemicals, backflow, pressurized water, brine or other solvents or other methods for removing debris from the membrane contactor system. Thus, the present invention may also include one or more systems for cleaning, flushing and regenerating the membrane.

In certain examples, the streams may have been partially or completely gravity settled and/or may be predominantly oil with solids and comparatively small amounts of water. To separate the solids from the oil it may be necessary to apply pressure to the stream as it enters the solid removal system and/or the stream may have to be heated (in one example, steam is applied to the stream to both heat the stream and increase the water content).

It was found that the present invention can be operated with or without a counter-flowing collection fluid. Therefore, the systems and methods can operate with or without a collection fluid to process contaminated oil.

It is contemplated that any embodiment discussed in this specification can be implemented with respect to any method, kit, reagent, or composition of the invention, and vice versa. Furthermore, compositions of the invention can be used to achieve methods of the invention.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

All publications and patent applications mentioned in the specification are indicative of the level of skill of those skilled in the art to which this invention pertains.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "or combinations thereof' as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about", "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skilled in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15%.

All of the compositions and/or methods disclosed and claimed herein can be made and executed without undue experimentation in light of the present disclosure.

## Claims

1. A method for removing contaminants from a contaminated oil comprising the steps of: pretreating a membrane contactor system having a first surface and a second surface by:
contacting at least one of the first surface and the second surface, or both the first surface and the second surface with an alcohol;
contacting at least one of the first surface and the second surface, or both the first surface and the second surface with a caustic;
contacting at least one of the first surface and the second surface, or both the first surface and the second surface with an acid;
drying at least one of the first surface and the second surface, or both the first surface and the second surface with an inert gas;
soaking the membrane contactor with a hydrophobic liquid or circulating the hydrophobic liquid in the membrane contactor, wherein the hydrophobic liquid is contacted to at least one of the first and second surfaces;
obtaining a contaminated oil that comprises oil and lipophobic contaminants;
contacting the contaminated oil onto a first surface of one or more membrane contactors to coalesce the oil on the first surface; and
collecting the coalesced oil from the contaminated oil on the second surface of the membrane contactor,
**characterised in that** the hydrophobic liquid is selected from an isoparaffinic hydrocarbon or a synthetic isoparaffinic hydrocarbon and that the membrane contactor is a hydrophobic microporous hollow fiber membrane comprising polyethylene, polypropylene, polyolefins, polyvinyl chloride (PVC), amorphous polyethylene terephthalate (PET), polyolefin copolymers, poly(etheretherketone) type polymers, surface modified polymers, mixtures or combinations thereof.

2. The method of claim 1, further comprising
filtering an oil and water mixture using a solid removal system for removing small, medium and large solids from the oil and water mixture to form a stream of the contaminated oil containing only solids smaller than 30 microns, wherein the small, medium or large solids are removed with at least one of a sand filter, a rock filter, a porous ceramic material, a centrifuge, a mesh, a particulate filter, a sieve, a strainer, or gravity.

3. The method of claim 1, wherein the contaminated oil is at least one of an oil-rich stream, crude oil, transportation fuel, heating oil, refined petroleum products, petrochemicals, bio-oils, renewable oils, vegetable oils, reclaimed oils, waste oils, oil industry liquid streams, oil contaminated water or brine, drilling mud, produced water and oil sands tailings.

4. The method of claim 1, wherein the contaminated oil is at least one of: not subjected to gravity separation prior to processing, subjected to gravity separation prior to processing, or subjected to centrifugation prior to processing.

5. The method of claim 1, wherein following use of the membrane the performance of the membrane degrades, wherein the membrane is washed using an acid, base and alcohol wash, the membrane is soaked in the hydrophobic liquid thereby increasing the flux rate of the hydrophobic membrane or membrane module by at least 10%.

6. The method of claim 1, wherein the oil separated from the contaminated oil by the membrane contactor is coalesced with a counterflowing fluid, wherein the at least one counterflowing fluid is selected from non-polar fluid, alkanes such as hexane, aromatic fluid such as benzene, toluene, ethers such as diethyl ether, halogenated fluid such as chloroform, dichloromethane, and esters such as ethyl acetate.

7. The method of claim 6, wherein the hydrophobic counterflowing collection fluid comprises an oil previously recovered using a hollow fiber contactor.

8. The method of claim 1, wherein the coalesced oil collected on the second surface of the membrane contactor is devoid of water and solids.

9. The method of claim 1, further comprising determining, using a clog detector, that the membrane contactor is clogged.

10. The method of claim 9, further comprising removing clogs from the membrane contactor by a physical-mechanical cleaning process, a chemical cleaning process, a backflow cleaning process, or a cleaning process using pressurized water, brine, or a solvent.

## Patentansprüche

1. Verfahren zum Entfernen von Verunreinigungssubstanzen aus einem verunreinigten Öl, welches die Schritte umfasst: Vorbehandeln eines Membrankontaktorsystems mit einer ersten Oberfläche und einer zweiten Oberfläche durch:
Kontaktieren von mindestens einer von der ersten Oberfläche und der zweiten Oberfläche oder sowohl der ersten Oberfläche, als auch der zweiten Oberfläche, mit einem Alkohol;
Kontaktieren von mindestens einer von der ersten Oberfläche und der zweiten Oberfläche oder sowohl der ersten Oberfläche, als auch der zweiten Oberfläche, mit einem Ätzmittel;
Kontaktieren von mindestens einer von der ersten Oberfläche und der zweiten Oberfläche oder sowohl der ersten Oberfläche, als auch der zweiten Oberfläche, mit einer Säure;
Trocknen von mindestens einer von der ersten Oberfläche und der zweiten Oberfläche oder sowohl der ersten Oberfläche, als auch der zweiten Oberfläche, mit einem inerten Gas;
Tränken des Membrankontaktors mit einer hydrophoben Flüssigkeit oder Zirkulieren der hydrophoben Flüssigkeit in dem Membrankontaktor, wobei die hydrophobe Flüssigkeit an mindestens einer der ersten und zweiten Oberflächen kontaktiert wird;
Erhalten eines verunreinigten Öls, das Öl und lipophobe Verunreinigungssubstanzen umfasst;
Kontaktieren des verunreinigten Öls auf eine erste Oberfläche von einem oder mehreren Membrankontaktoren, um das Öl auf der ersten Oberfläche zu koaleszieren; und
Sammeln des koaleszierten Öls vom verunreinigten Öl an der zweiten Oberfläche des Membrankontaktors,
**dadurch gekennzeichnet, dass** die hydrophobe Flüssigkeit ausgewählt ist aus einem isoparaffinischen Kohlenwasserstoff oder einem synthetischen isoparaffinischen Kohlenwasserstoff, und dass der Membrankontaktor eine hydrophobe, mikroporöse Hohlfasermembran ist, welche Polyethylen, Polypropylen, Polyolefine, Polyvinylchlorid (PVC), amorphes Polyethylenterephthalat (PET), Polyolefin-Copolymere, Poly(etheretherketon)-artige Polymere, oberflächenmodifizierte Polymere, Gemische oder Kombinationen daraus umfasst.

2. Verfahren nach Anspruch 1, welches ferner umfasst:
Filtrieren eines Öl und Wasser Gemisches unter Verwendung eines Feststoffabscheidesystems, um kleine, mittlere und große Feststoffe aus dem Öl und Wasser Gemisch zu entfernen, um einen Strom aus dem verunreinigten Öl zu bilden, welches nur Feststoffe kleiner als 30 Mikron enthält, wobei die kleinen, mittleren oder großen Feststoffe mit mindestens einem von einem Sandfilter, einem Gesteinsfilter, einem porösen Keramikmaterial, einer Zentrifuge, einer Masche, einem Feinstfilter, einem Sieb, einem Seiher oder Schwerkraft entfernt werden.

3. Verfahren nach Anspruch 1, worin das verunreinigte Öl mindestens eines von einem ölreichen Strom, Rohöl, Transportbrennstoff, Heizöl, raffinierten Petroleumprodukten, Petrochemikalien, Bioölen, erneuerbaren Ölen, Pflanzenölen, zurückgewonnenen Ölen, Abfallölen, Ölindustrie-Flüssigkeitsströmen, mit Öl verunreinigtem Wasser oder Sole, Bohrschlamm, hergestelltem Wasser und Öl-Sandablagerungen ist.

4. Verfahren nach Anspruch 1, worin das verunreinigte Öl mindestens eines ist von: nicht Schwerkraftabtrennung vor Verarbeitung unterworfen, Schwerkraftabtrennung vor Verarbeitung unterworfen oder Zentrifugation vor Verarbeitung unterworfen.

5. Verfahren nach Anspruch 1, worin sich nach Verwenden der Membran die Leistung der Membran abbaut, worin die Membran unter Verwendung einer Säure, Base und Alkoholwäsche gewaschen wird, die Membran in der hydrophoben Flüssigkeit getränkt wird, wodurch die Flussrate der hydrophoben Membran oder des Membranmoduls um mindestens 10% erhöht wird.

6. Verfahren nach Anspruch 1, worin das durch den Membrankontaktor aus dem verunreinigten Öl abgetrennte Öl mit einem Gegenstromfluid koalesziert wird, worin das mindestens eine Gegenstromfluid ausgewählt ist aus nicht-polarem Fluid, Alkanen wie Hexan, aromatischem Fluid wie Benzol, Toluol, Ethern wie Diethylether, halogeniertem Fluid wie Chloroform, Dichlormethan und Estern wie Ethylacetat.

7. Verfahren nach Anspruch 6, worin das hydrophobe Gegenstrom-Sammlungsfluid ein Öl umfasst, welches vorangehend unter Verwendung eines Hohlfaserkontaktors gewonnen wurde.

8. Verfahren nach Anspruch 1, worin das koaleszierte Öl, gesammelt an der zweiten Oberfläche des Membrankontaktors, frei von Wasser und Feststoffen ist.

9. Verfahren nach Anspruch 1, welches ferner Bestimmen unter Verwendung eines Verstopfungsdetektors, dass der Membrankontaktor verstopft ist, umfasst.

10. Verfahren nach Anspruch 9, welches ferner Entfernen von Verstopfungen aus dem Membrankontaktor durch ein physikalischmechanisches Reinigungsverfahren, ein chemisches Reinigungsverfahren, ein Rückfluss-Reinigungsverfahren oder ein Reinigungsverfahren unter Verwendung von unter Druck gesetztem Wasser, Kochsalzlösung oder einem Lösungsmittel umfasst.

## Revendications

1. Procédé d'élimination des contaminants à partir d'une huile contaminée comprenant les étapes suivantes :
le prétraitement d'un système de contacteur à membrane ayant une première surface et une seconde surface par :
le contact d'au moins l'une parmi la première surface et la seconde surface, ou à la fois de la première surface et de la seconde surface avec un alcool ;
le contact d'au moins l'une parmi la première surface et la seconde surface, ou à la fois de la première surface et de la seconde surface avec un agent caustique ;
le contact d'au moins l'une parmi la première surface et la seconde surface, ou à la fois de la première surface et de la seconde surface avec un acide ;
le séchage d'au moins l'une parmi la première surface et la seconde surface, ou à la fois de la première surface et de la seconde surface avec un gaz inerte ;
le trempage du contacteur à membrane avec un liquide hydrophobe ou la mise en circulation du liquide hydrophobe dans le contacteur à membrane, dans lequel le liquide hydrophobe est mis en contact avec au moins l'une des première et seconde surfaces ;
l'obtention d'une huile contaminée qui comprend une huile et des contaminants lipophobes ;
le contact de l'huile contaminée sur une première surface d'un ou de plusieurs contacteurs à membrane pour entraîner la coalescence de l'huile sur la première surface ; et
la collecte de l'huile coalescée à partir de l'huile contaminée sur la seconde surface du contacteur à membrane,
**caractérisé en ce que** le liquide hydrophobe est sélectionné parmi un hydrocarbure isoparaffinique ou un hydrocarbure isoparaffinique synthétique et **en ce que** le contacteur à membrane est une membrane de fibres creuses microporeuses hydrophobes comprenant un polyéthylène, un polypropylène, des polyoléfines, un polychlorure de vinyle (PVC), un polytéréphtalate d'éthylène (PET) amorphe, des copolymères de polyoléfine, des polymères de type poly(étheréther-cétone), des polymères modifiés en surface, des mélanges ou des combinaisons de ceux-ci.

2. Procédé selon la revendication 1, comprenant en outre
la filtration d'un mélange d'huile et d'eau en utilisant un système d'élimination de solide pour éliminer les petits, moyens ou grands solides à partir du mélange d'huile et d'eau pour former un courant de l'huile contaminée contenant uniquement des solides inférieurs à 30 microns, dans lequel les petits, moyens ou grands solides sont éliminés avec au moins l'un parmi un filtre à sable, un filtre à roche, un matériau céramique poreux, une centrifugeuse, une maille, un filtre à particule, un tamis, une crépine, ou la gravité.

3. Procédé selon la revendication 1, dans lequel l'huile contaminée est au moins l'un parmi un courant en huile riche, une huile brute, un carburant de transport, une huile de chauffage, des produits pétroliers raffinés, des produits pétrochimiques, des bio-huiles, des huiles renouvelables, des huiles végétales, des huiles régénérées, des déchets huileux, des courants liquides de l'industrie pétrolière, une eau ou une saumure contaminée par une huile, une boue de forage, une eau et les résidus des sables bitumineux produits.

4. Procédé selon la revendication 1, dans lequel l'huile contaminée est au moins l'une parmi : non soumise à une séparation par gravité avant le traitement, soumise à une séparation par gravité avant le traitement, ou soumise à une centrifugation avant le traitement.

5. Procédé selon la revendication 1, dans lequel après l'utilisation de la membrane les performances de la membrane se dégradent, dans lequel la membrane est lavée en utilisant un lavage par acide, base et alcool, la membrane est trempée dans le liquide hydrophobe pour ainsi augmenter le débit de la membrane hydrophobe ou du module à membrane d'au moins 10 %.

6. Procédé selon la revendication 1, dans lequel l'huile séparée à partir de l'huile contaminée par le contacteur à membrane est soumise à une coalescence avec un fluide allant à contre-courant, dans lequel l'au moins un fluide allant à contre-courant est sélectionné parmi un fluide non polaire, les alcanes tels que l'hexane, un fluide aromatique tel que le benzène, le toluène, les éthers tels que le diéthyl éther, un fluide halogéné tel que le chloroforme, le dichlorométhane, et les esters tels que l'acétate d'éthyle.

7. Procédé selon la revendication 6, dans lequel le fluide hydrophobe de collecte allant à contre-courant comprend une huile précédemment récupérée en utilisant un contacteur à fibres creuses.

8. Procédé selon la revendication 1, dans lequel l'huile coalescée collectée sur la seconde surface du contacteur à membrane est dépourvue d'eau et de solides.

9. Procédé selon la revendication 1, comprenant en outre la détermination, en utilisant un détecteur d'encrassement, que le contacteur à membrane est encrassé.

10. Procédé selon la revendication 9, comprenant en outre l'élimination de l'encrassement du contacteur à membrane par un procédé de nettoyage physico-mécanique, un procédé de nettoyage chimique, un procédé de nettoyage par refoulement, ou un procédé de nettoyage utilisant de l'eau sous pression, de la saumure, ou un solvant.
